# EUROPEAN PATENT SPECIFICATION

(11) **EP 1 595 584 B1**
(45) Date of publication and mention of the grant of the patent: **27.06.2007**
(21) Application number: 05252803.1
(22) Date of filing: 06.05.2005
(51) Int. Cl.: A63F 13/00, G06T 15/20

(54) **Image processing program, game information processing program and game information processing apparatus**
Bildverarbeitungsprogramm, spielinformationsverarbeitendes Programm und spielinformationsverarbeitendes Gerät
Programme de traitement d'image, programme de traitement d'information de jeux et appareil de traitement d'information de jeux

(30) Priority: 11.05.2004 JP 2004141660
(43) Date of publication of application: 16.11.2005
(73) Proprietor: SEGA CORPORATION, Ohta-ku, Tokyo 144-8531 (JP)
(72) Inventor: Hayashida, Yasuhiro, Ohta-ku Tokyo 144-8531 (JP); Matsuo, Tsutomu, Ohta-ku Tokyo 144-8531 (JP)
(74) Representative: Brown, Kenneth Richard

(56) References cited:
- US-A1- 2001 049 300
- US-A1- 2003 166 413
- US-B1- 6 241 609

## Description

### Background of the Invention

### Field of the Invention

The present invention relates to an image processing program and game information program of a video game in which a player character is operated on a display image so as to fight against an enemy character, and to a game information processing apparatus.

### Prior Art

There is a case that an especially strong character (Called "Boss Character" hereafter) as an enemy character is provided at a predetermined position in a map of a fighting game or in an action game in which a player beats enemy characters with moving in the map, executed on video game apparatus of amusement centers, family game machines and personal computers.

In such a game, it is necessary for the player character to attack harder at the fighting against the boss character (Called "Boss Fight" ) than at the fight against normal enemy character (Called "Trivial Character" hereafter). On the other hand, since the player character is attacked also by the trivial characters, the player character has to pay attention to the circumstances and a complicated operation is required.

Therefore, a conventional game program is proposed in which a view direction is fixed toward the boss character only when a predetermined operation is operated.

However, in such a game program, when the view direction is fixed toward the boss character, the player character is also fixed to face the boss character, despite the player character fights against either the boss character or the trivial character.

The behavior of the player character is strictly limited and operation feeling is changed, and the dynamics and interest of the game declines.

US 6,241,609 discloses a multi-user interactive virtual environment system wherein each character has an interaction zone of the predetermined size and shape maintained about its current virtual environment location. When the respective interaction zones of two or more user-assigned characters overlap, their respective virtual cameras are controlled to move from first- to third-person viewpoints for as long as the overlap remains.

### Summary of the Invention

The present invention is invented to solve the above conventional problems and has an object to simplify the operation of fighting against the boss character without different feeling from the fighting against the trivial characters, with securing the dynamics and interest as a game.

The present invention provides an image processing program according to claim 1, a game information processing apparatus according to claim 5, and a memory medium according to claim 9.

Therefore, both of the player character and the boss character are included in a predetermined visual field from a view point at the player character side.

In accordance with the features of claims 2 and 6 the player character are included in a predetermined visual field from a view point at the enemy character side.

In accordance with the features of claims 3 and 8 both of the player character and the boss character are included in a predetermined visual field from a view point at the player character side, as well as, the player character are included in a predetermined visual field from a view point at the enemy character side. A fighting mainly against the boss character occasionally is possible with free operation of the player character. So, the operation of fighting against the boss character is simplified with keeping powerful dynamics and interest as the game.

In accordance with the features of claims 4 and 8 both of the player character and the boss character are included in a predetermined horizontal and vertical visual fields from a view point at the player character side.

### Brief Description of Drawings

Fig. 1 is a block diagram showing an example of a game information processing apparatus which executes a game program according to the present invention;
Fig. 2 is a plan view showing a controller connected to the game information processing apparatus of Fig. 1.
Fig. 3 is a figure showing a display image when an embodiment of the game program according to the present invention is executed on the game information processing apparatus of Fig. 1. (Fighting against Trivial Character)
Fig. 4 is another figure showing a display image when an embodiment of the game program according to the present invention is executed on the game information processing apparatus of Fig. 1. (Fighting against Trivial Character)
Fig. 5 is another figure showing a display image when an embodiment of the game program according to the present invention is executed on the game information processing apparatus of Fig. 1. (Fighting against Trivial Character when Boss Character appears)
Fig. 6 is another figure showing a display image when an embodiment of the game program according to the present invention is executed on the game information processing apparatus of Fig. 1. (Fighting against Boss Character)
Fig. 7 is another figure showing a display image when an embodiment of the game program according to the present invention is executed on the game information processing apparatus of Fig. 1. (Fighting against Boss Character)
Fig. 8 is another figure showing a display image when an embodiment of the game program according to the present invention is executed on the game information processing apparatus of Fig. 1. (Fighting against Boss Character)
Fig. 9 is another figure showing a display image when an embodiment of the game program according to the present invention is executed on the game information processing apparatus of Fig. 1. (Fighting against Boss Character)
Fig. 10 is another figure showing a display image when an embodiment of the game program according to the present invention is executed on the game information processing apparatus of Fig. 1. (Fighting against Boss Character)
Fig. 11 is another figure showing a display image when an embodiment of the game program according to the present invention is executed on the game information processing apparatus of Fig. 1. (View Point Reset)
Fig. 12 is another figure showing a display image when an embodiment of the game program according to the present invention is executed on the game information processing apparatus of Fig. 1. (View Point Reset)
Fig 13 shows a plan view and elevation view showing a setting of a virtual camera for a boss lock mode in the embodiment of the game program according to the present invention;
Fig 14 is a plan view showing an adjustment according a horizontal visual field angle on setting a virtual camera for a boss lock mode.
Fig 15 is a plan view showing an adjustment according to an angle viewing a virtual camera and a player character from a boss character on setting a virtual camera for a boss lock mode.
Fig 16 is a plan view showing an adjustment according a vertical visual field angle on setting a virtual camera for a boss lock mode.
Fig 17 is a plan view showing a collision processing on setting a virtual camera. Fig 18 is a flowchart showing a processing of fighting against a boss character in a game program according to the present invention; and
Fig 19 is a flowchart showing a processing of modifying a view point and view direction (Step S 1808) in Fig. 18.

### Detailed Description of the Invention

Next, a preferred embodiment of a game program according to the present invention is described with referring to the attached drawings.

### Embodiment

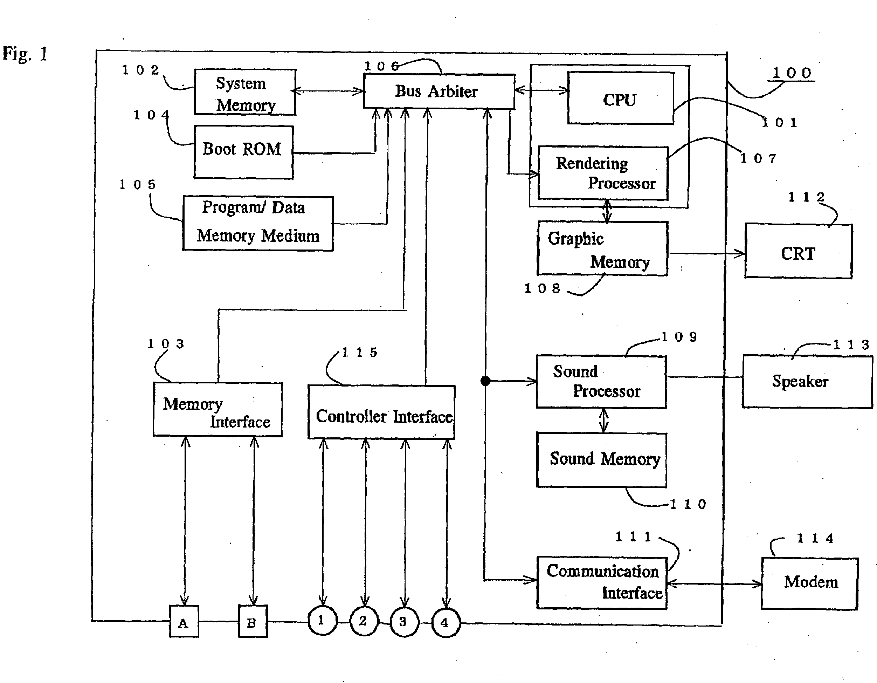

Fig. 1 shows an example of an information processing apparatus for executing an embodiment of a game program.

### [Information Processing Apparatus]

In Fig. 1, an information processing apparatus 100 includes as components, a CPU 101 for controlling totally the apparatus, a boot-ROM 104 for storing a program which starts up the information processing apparatus 100, a program/data memory means 105 for storing a program and data executed by the CPU 101, a system memory 102 for storing the program and data read from the program/data memory means 105 and so forth. The information processing apparatus is applied to a personal computer, a game machine, a handy phone and other communication apparatuses for executing a game program such as a fighting game and action game, and is applied to a game information processing apparatus which can execute a game program.

Other programs and data for generating and controlling a displayed image than a program and data for controlling a game are also included in the program and data executed by the CPU 101.

Polygon data including three dimensional local coordinate data of apexes of polygons, by which objects to be displayed are constructed, are stored in the system memory 102 in order to generate an image to be displayed in the game program. The polygon data are arranged in a three dimensional virtual world coordinate system by the CPU 101 or a geometric processor (not shown) so that the local coordinate is transformed into the world coordinate system.

Further, a virtual camera is set in the world coordinate system. Objects viewed by the virtual camera at a predetermined view angle is transformed into a view point coordinate system of an origin of the virtual camera coordinate. A view point coordinate of the transformed object is transmitted to the rendering processor 107.

The rendering processor 107 processes an interpolating processing such as a light source processing, and texture data stored in the graphic memory 108 is pasted on the object for a detail trimming of the surface of the object. The object (polygon) is projected on a two dimensional plane and transformed into a two dimensional coordinate data so that the three dimensional solid object is displayed on the two dimensional display means 112 of a CRT or a liquid crystal display device. The shallower concerning Z-coordinate depth the polygon is, that is, the nearer from the view point the polygon is, the higher the display priority of the polygon is. Then, a two dimensional image is generated and output to the display means.

Therefore, the CPU 101 and the rendering processor 107 are controlled by the game program and functions as an image generating means 117.

As the display means 112, a CRT as a TV monitor, a color LCD, a plasma display device, a DLP type projector and any other display means can be applied.

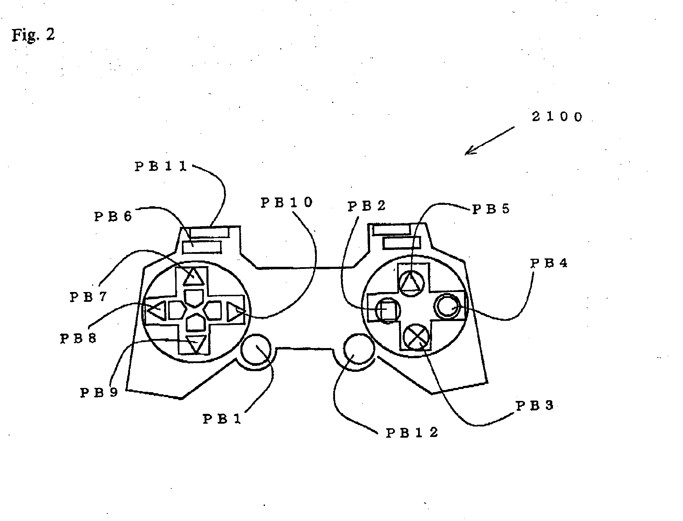

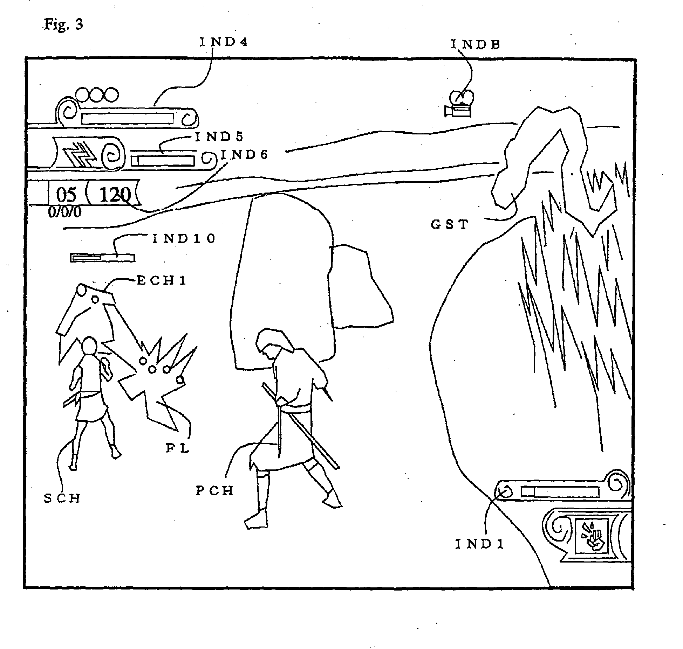

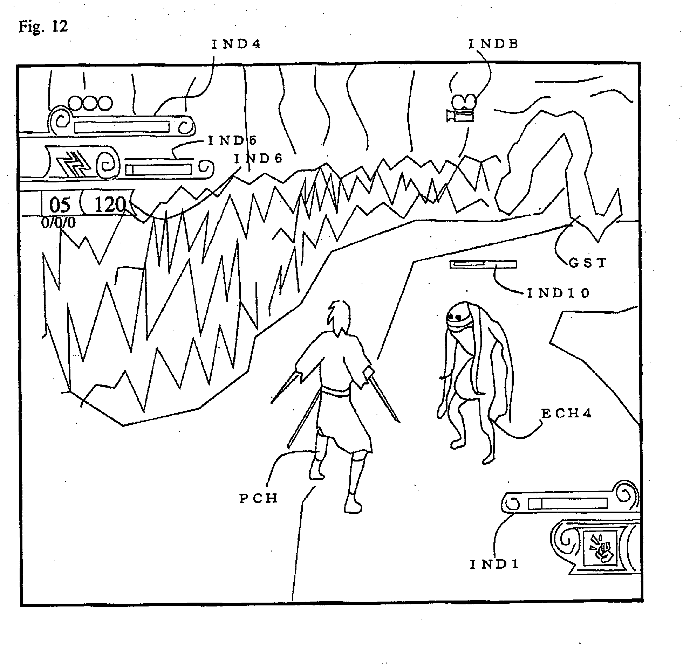

Terminals 1, 2, 3 and 4 for connecting a controller 2100 (Fig.2) are provided in the game machine, to which a controller interface 115 is connected. Therefore, the player character PCH (Figs.3 to 12) is controlled by the controller 2100 (Fig. 2).

A microphone (not shown) can be connected to the terminals 1, 2, 3 and 4 and the controller interface 115 other than the controller 2100 so that a sound signal transformed into a digital signal in the microphone can be input to the game machine. A keyboard and other character input devices and a mouse, a tablet or other pointing devices can be connected so that their functions are added to the game machine.

The information processing apparatus 100 includes a sound processor for generating sound and a sound memory 110 for storing the sound data generated. The sound processor 109 generates a sound digital signal according to the data stored in the sound memory 110 so that sound is output from a speaker 113 or headphone (not shown).

Slots A and B are provided in the information processing apparatus for inserting a memory card and memory cartridge as memory means to which a memory interface 103 is connected. A status of the game and users and other data can be stored in the memory means. The game can be restarted from an interrupted point by reading the data through the memory interface 103 into the system memory after the game is interrupted.

As the memory means, a CD-RW, a DVD-RW, a DVD-RAM, an optical magnetic disk of optical type or magnetic type readable as well as writable media, and electrically readable media such as flash memory may be applicable. If a starting up program is stored in the memory medium and the information processing apparatus is designed that the program is read from the memory medium when the information processing apparatus is started up, the boot ROM 101 can be omitted.

A communication interface 111 and a modem 114 are provided in the information processing apparatus 100. The information processing apparatus 100 is connected to the internet or a local net through a LAN or the modem 114 so that a competition, cooperation and communication with other users are possible.

As a communication type of the communication interface 111, a wired serial or parallel communication, a wireless communication and any other types may be applied.

The above components of the information processing apparatus 100 are connected to a bus. Input and output of the program and data between the components are controlled by a bus arbiter 106.

The construction of the information processing apparatus is not limited to that of Fig. 1. A general purpose computer, a mobile computer, a handy phone and other information processing apparatus may be applied to a game information processing apparatus such as the game machine.

When the game program according to the present invention is executed in the above information processing apparatus, a program executable by a computer including program codes which let the game information processing apparatus execute each step of the program for executing the game, is read into the game information processing apparatus.

The program by which the game information processing apparatus executes the game is read from the program/data memory means 105 incorporated within the game information processing apparatus or a memory medium attached to the game information processing apparatus, or from a server etc. through a network. As the memory means, a CD-RW or a DVD-ROM of an optically readable medium, a mask ROM an EP-ROM or a flash memory of an electrically readable medium are applicable. If a starting up program is stored in the memory medium and the information processing apparatus is designed that the program is read from the memory medium when the information processing apparatus is started up, the boot ROM 101 can be omitted.

### [Controller and Character]

In Fig. 2, a plurality of buttons PB1 to PB12 are provide in the controller 2100 for controlling the player character PCH (Figs. 3 to 12) and setting a behavior pattern of a sub-character SCH. The sub-character SCH behaves in the virtual space, in response to a movement of the player character, or independently from the movement and according to an algorithm for controlling the sub-character executed by the CPU 100.

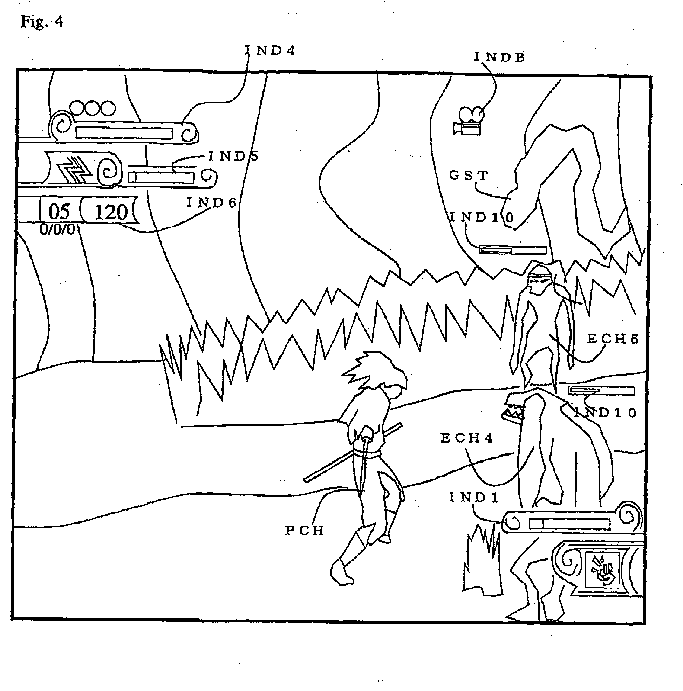

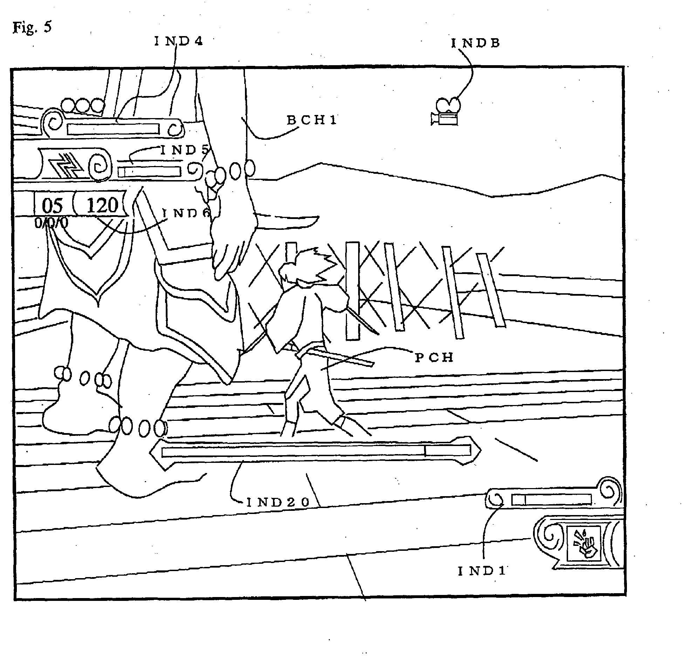

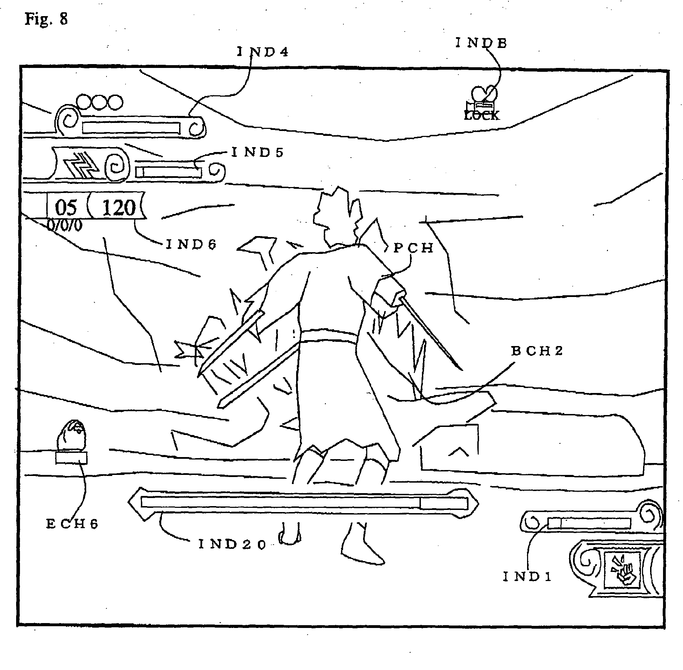

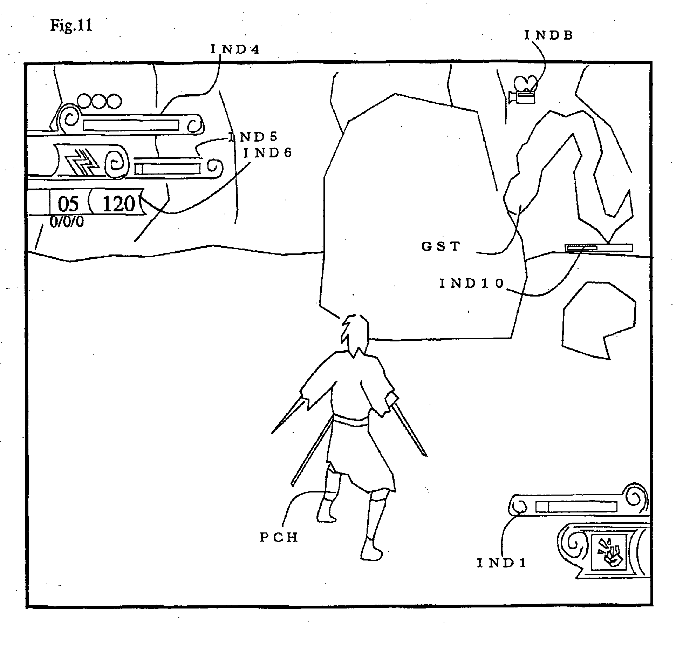

When the game program is executed, display images of Figs. 3 to 12 are displayed in the display means 112. In the display images, the player character PCH, the sub-character SCH, the boss character BCH1 (Figs. 5 to 7), the boss character BCH2 (Fig. 8, Fig. 9 and Fig. 12), an enemy character ECH1 (Fig. 3, Fig. 4, Fig. 10 and Fig. 11), an enemy character ECH2 (Fig.3), an enemy character ECH3 (Fig. 3), an enemy character ECH4 (Fig.4 and Fig. 11) and an enemy character ECH5 (Fig.4) are displayed.

When the button PB1, PB2, PB3 and PB5 of the controller 2100 are push, the player character PCH makes "attack", "jump" and "hard attack" , respectively. The direction of the behavior is set by the button PB7 to PB 10.

Further, when the button PB 11 of the controller 2100 is push, the view point of the display image can be alternatively changed. By pushing the button PB11, the view point is set so that the boss character BCH1 or BCH2 is always shown in the display image together with the player character PCH ( "Boss Lock Mode", hereafter). By pushing the button PB11 again during the boss lock mode, the boss lock mode is cancelled. The boss lock mode is described later.

During the trivial character fight, by pushing the button PB12, the virtual camera is directed to a direction of the view direction of the player character PCH from behind the player character PCH ( "view point reset" ). During the "view point reset", the circumstance in front of the player character PCH is displayed.

The "view point change" means changing of the view point and/or view direction, when an image is generated viewed from the view point set in the virtual space toward the view direction for three dimensional displaying of polygons etc. When a two dimensional image such as a sprite image is to be displayed, the "view point change" means changing one image to the other among a plurality of two dimensional images prepared in advance or changing display size of the two dimensional mage displayed.

Therefore, the view point change according to the present invention is controlled by the player so that a mode suitable for the trivial character fight against only trivial characters as shown in Figs. 3, 4, 11 and 12 and a mode suitable for the boss fight against the boss characters as shown in Figs. 5 to 10 are alternatively set. In Fig. 5, the boss lock mode is cancelled so that the trivial character fight is also possible.

In this case, since the view point can be set according to the position of the player and enemy characters, the player can easily play and advance the game.

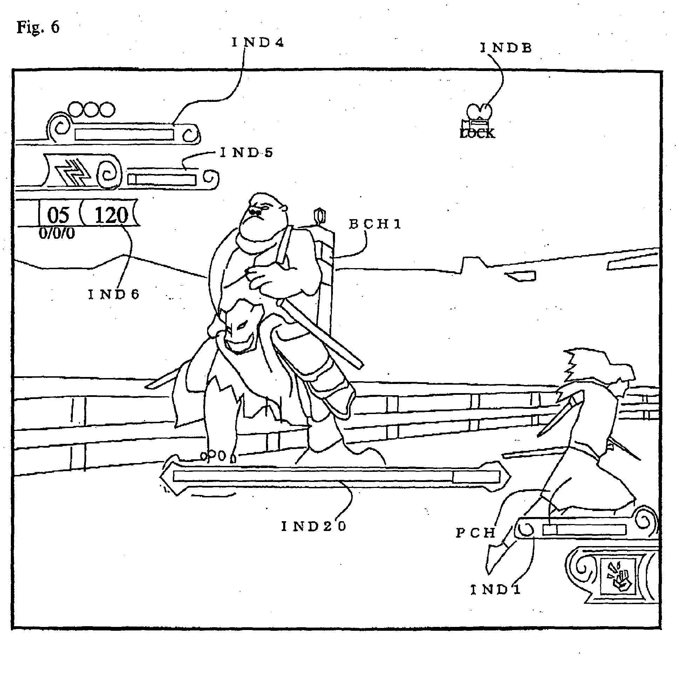

Figs. 3, 4, 11 and 12 are display images of trivial character fight in which only the trivial characters appear as enemy characters. Fig. 5 is a display image of trivial character fight in which the trivial and boss characters appear as enemy characters. Figs. 6 to 10 are display images of boss fight (boss lock mode) in which the boss and trivial characters appear.

The game program of the present embodiment advances stages, for example, from the stage shown in the display images of Figs. 3, 4, 11 and 12 to the stage shown in the display images of Figs. 5 to 7, or to the stage shown in the display images of Figs. 8 to 10. During the transition of the game, the player character PCH executes one trivial character fight after another and meets with the boss characters BCH1 and BCH2 at important points or at the final stage. The boss lock mode is operable when the player character PCH reaches the stages where the boss characters exist.

Fig. 3 shows the display image of the trivial character fight in which the player character PCH, the sub-character SCH and the trivial character ECH1 are shown. And liquid FL vomited from the trivial character ECH1 and a spirit of dead person GST which generates enemy characters are shown.

In Fig. 3, by pushing the button PB1, PB2, PB3 and PB5 of the controller 2100, the player character PCH makes "attack" , "jump" and "hard attack" , respectively. The direction of the behavior is set by the button PB7 to PB 10.

In the display image, the distance between the player character PCH and the virtual camera (view point) is substantially constant. When the player character PCH is moved leftwards and rightwards, the player character PCH freely turns left and right, respectively, while the virtual camera (view point) is fixed. When the view point reset is performed, since the virtual camera moves to a position for viewing the from behind the player character PCH, the player can take care of the front side of the player character PCH, that is, the trivial characters as the objects to be attacked positioned in front of the player character PCH. Further, since the player character PCH can move freely with turning from this situation, it is possible to reset the view point so as to set the view point suitable for moving on the map, that is, to set the view direction of forward direction, after the fight against the trivial character around the player character.

In the display image, there are shown a camera indicator INDB showing whether it is the boss lock mode or not, a power gage IND1 showing an energy level of the sub-character SCH, a power indicator IND4 showing the energy level of the player character PCH, and a deadly attack technique level IND5 of the player character PCH. The number of the deadly attack techniques is decreased by one every when the deadly attack technique level reaches maximum. Further, there are shown a indicator IND6 showing a number of bullets of a cannon (left: 05) and of a machinegun (right: 120) and a power gage IND10 showing the energy level of the enemy characters ECH3 etc. and other indicators. Similar indicators shown in the following description of the following display images (Figs. 4 to 12) are designated by the same references and description for them are omitted.

Fig. 4 shows a display image of another trivial character fight in which the player character PCH, the trivial character ECH1, ECH4 and ECH5 are shown. The camera indicator INDB for indicating whether it is boss lock mode or not, shows only a camera mark which shows a camera mode of the trivial character mode.

Fig. 5 is a stage where the boss character BCH1 appears together with the player character PCH. Since the boss lock mode is not set, the player character PCH can fight the trivial character fight. In the figure, the indicator IND20 indicates the energy level of the boss character BCH1.

In the display image of Fig. 5, the player character PCH moves freely, and the boss character BCH1 disappears from the image according to the moving distance and the view direction.

Therefore, since the boss lock mode is immediately set and cancelled by the button PB11, the player character has advantages in the boss fight as well as copes with the trivial character fight.

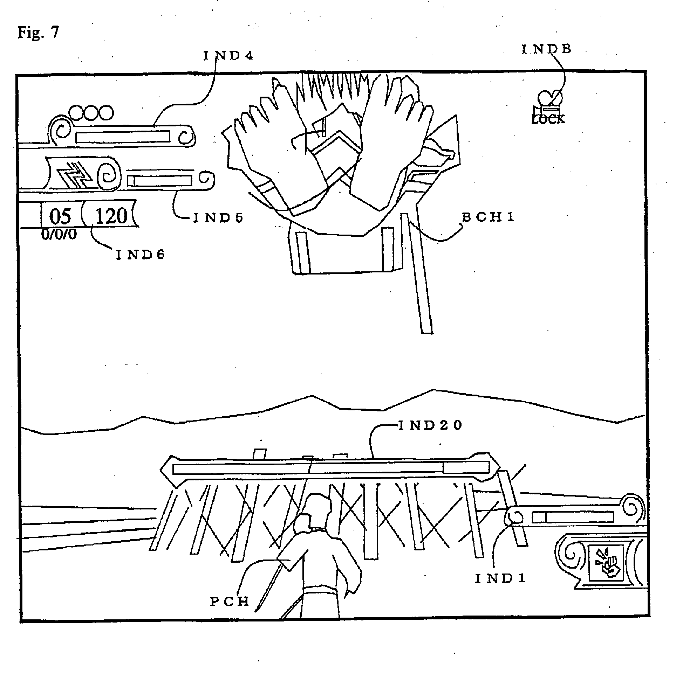

In Figs. 6 and 7, the boss lock mode is set at the stage where the boss character BCH1 appears similarly to the stage of Fig. 5. Here, the indicator INDB shows "LOCK" for indicating the boss lock mode.

In the display image of Fig. 6, the player character PCH runs rightwards by a long distance, and in the display image of Fig. 7, the boss character BCH1 jumps high above in the sky. However, both of the player character PCH and the boss character BCH1 are always shown in the display image because the virtual camera is adjusted in its view point and the view direction.

The player never loses sight of the boss character and can make effective attack even when a three dimensional movement occurs of a great extent.

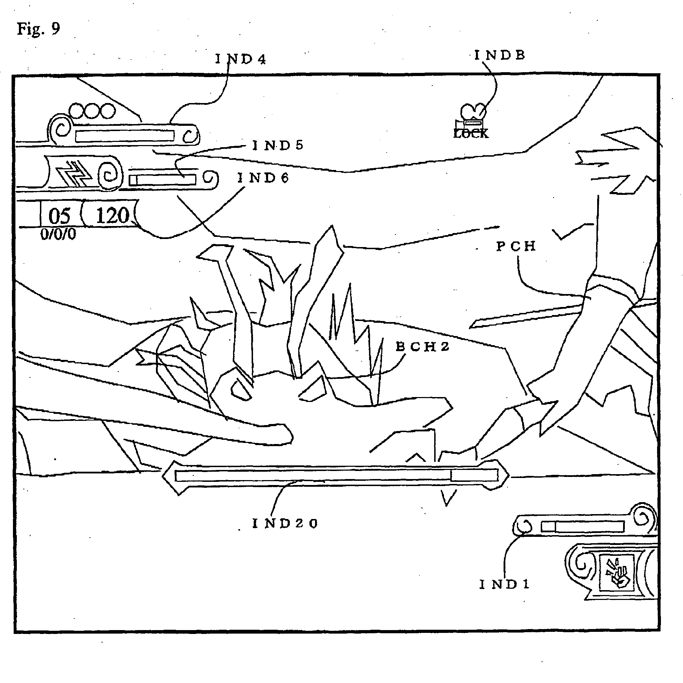

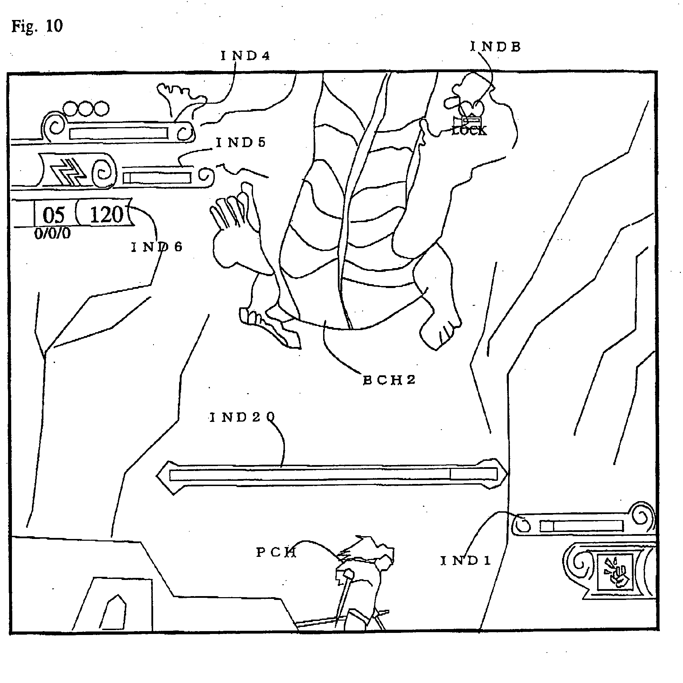

Figs. 8 to 10 show display images of another boss fight (boss lock mode) where the boss character BCH2 appears together with the player character PCH. In Fig. 8, the boss character BCH2 and the player character PCH stand face to face with each other. In Fig. 9, the player character PCH runs rightwards by a long distance. In Fig. 10, the boss character BCH2 jumps high abode in the sky.

### [Control Method of View Point and View Direction]

Next, a method for controlling the virtual camera (view point and view direction) is described in the boss lock mode.

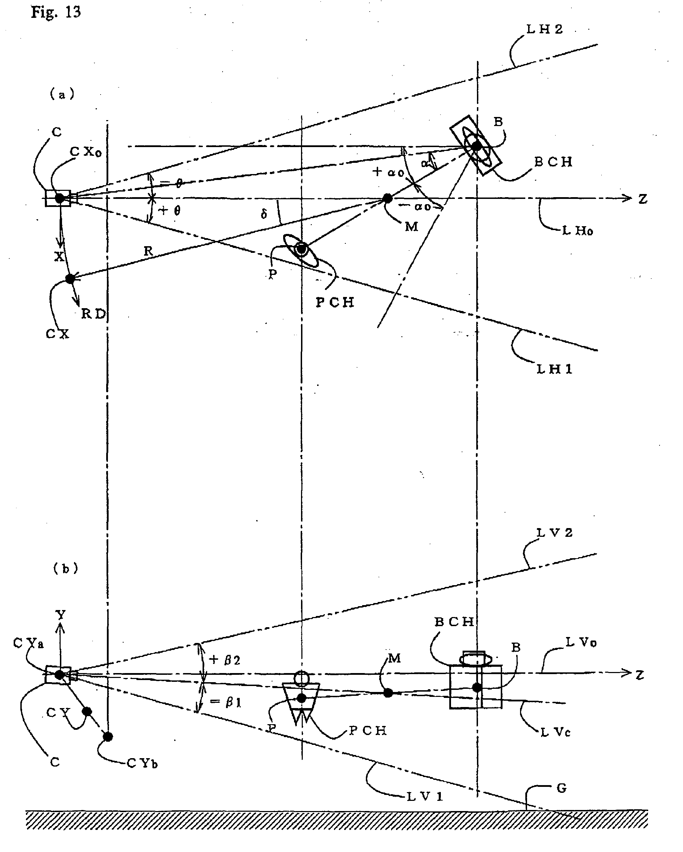

Fig. 13 includes (a) plan view and (b) elevation view showing an exemplar position of the virtual camera in the boss lock mode.

In the plan view, the virtual camera C is positioned at CXo first, and the view point and the view direction are set so that both of the player character PCH and the boss character BCH are included within an area of a horizontal visual field angle from - θ to + θ (in an area between straight lines LH1 and LH2 passing through CXo) from Z axis (depth direction of an optical axis LHo of the virtual camera of initial condition), as well as, so that the virtual camera C observes the boss character BCH from behind the player character PCH.

In the figure, X axis extends in the right and left direction from the Z axis.

Further, in the plan view, the angle α of the view direction from the virtual camera toward the boss character BCH with respect to the view direction from the boss character BCH toward player character PCH, is set within a predetermined angle range of -αo~+αo.

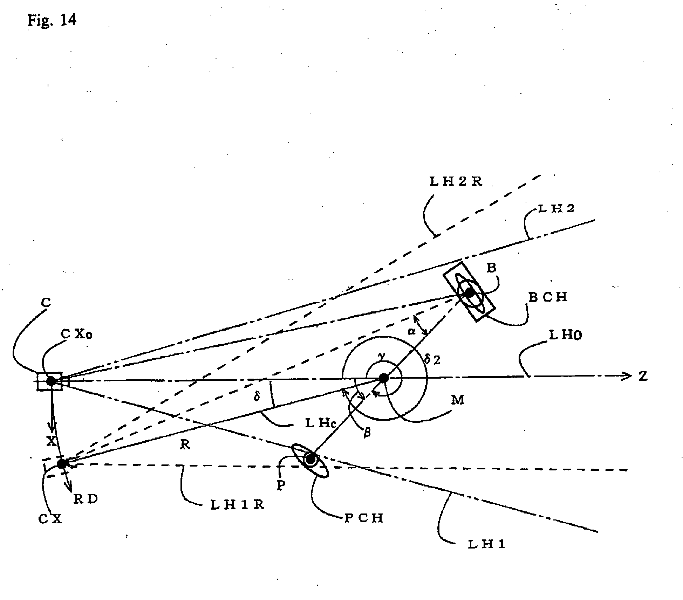

The method of adjusting the view point and the view angle of the virtual camera C is that a reference point (the middle point between P and B, for example) is obtained on a straight line connecting the player character PCH and that the boss character BCH, the virtual camera C is rotated with keeping its optical axis passing through M, and that the virtual camera C is moved with rotation along an arc of a constant distance R from M in a direction (RD direction in Fig. 13) toward the behind of the player character PCH. The moving angle is for example δ, and the position of the virtual camera C after the movement is CX in Figs. 13 and 14, for example. The middle point M is kept to be the observed point.

Reference points are allocated as representing coordinate points (represent points) on the surface of the polygon constructing the characters or within the inside of the player and boss characters. The reference point M is obtained on a straight line connecting the represent points of the characters.

In the elevation view, the virtual camera C is positioned at CYa first, and the view point and the view direction are set so that both of the player character PCH and the boss character are included within an area of a vertical visual field angle from - β 1 to + β 2 (in a area between straight lines LV2 and LVo passing through CYa) from Z axis (A depth direction of horizontal axis LVo passing through CYa).

At first, the optical axis LVc of the virtual camera C is set to pass the middle point M of the represent points (center of gravity, for example) P and B of the player character PCH and the boss character BCH. When the boss character BCH moves to be higher than the straight line LVo, the view point of the virtual camera C is moved to a position CYb below the player character PCH. The straight line LVo is a straight line of a predetermined height in the Y direction from a reference plane in the three dimensional virtual space independently from the position of the virtual camera.

The virtual camera C may be controlled to be moved to the position CYb according to the judgment whether the boss character BCH is higher than a predetermined height in the Y direction from the reference plane or not in the three dimensional space, independently from these straight lines.

In the figure, the Y axis is vertical with respect to the Z axis.

The vertical view field is set from an lower limit of LV1 and its upper limit is a straight line passing through CYa. Even when the player character PCH and the boss character BCH moves beyond the upper or lower limit, the view point of the virtual camera never moves down under CYb. It is because that the ground is shown at the bottom, and that if the virtual camera is positioned under the ground, the player character PCH and the boss character BCH is expressed as they were floating in the air.

The adjusting method of the view point and the view direction is that when the boss character BCH moves higher than the straight line LVo, the virtual camera position (view point) CY is moved forwards and upwards from CYa toward CYb. Then, the view direction is turned toward a point CM which is nearer from the boss character BCH than the middle point M on the straight line LPB connecting the reference points P and B. The observed point is changed from M to CM.

Therefore, the virtual camera C observes the player character PCH and the boss character BCH at a greater elevation angle after moving under the player character PCH.

Fig. 14 is a plan view showing the adjustment of the view point and the view direction of the virtual camera C according to the horizontal visual field angle from - θ to +θ.

In Fig. 14, a situation is shown that the player character PCH moves in the direction along X axis beyond LH1, up to the outside of LH1. The virtual camera C moves along an arc of a constant radius R by an angle δ in the direction toward RD up to CX. The optical axis LHc of the virtual camera C after the movement is set so as to pass through the middle point M of the reference points P and B of the player character PCH and the boss character BCH, respectively. A horizontal visual field defined by LH 1 (corresponding to LH1 before movement) and LH2 (corresponding to LH2 before movement) is newly shaped.

The position of CX is set so that the player character PCH and the boss character BCH are within the new horizontal visual field of LH1 and LH2.

Therefore, both of the player character PCH and the boss character BCH are included within the horizontal visual field from the view point at the player character PCH. If the boss character BCH move in the direction along X axis beyond the limit of LH1 or LH2, the similar processing is executed.

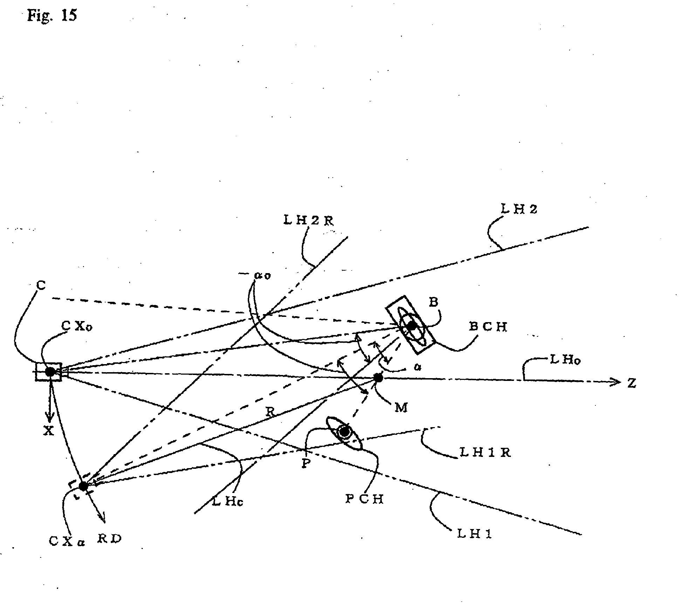

Fig. 15 is a plan view showing the adjustment of the view point and the view direction of the virtual camera C according to the angle from - α o to + α o observing the virtual camera C and the player character PCH from the boss character BCH.

In Fig. 15, the virtual camera C moves along an arc of a constant radius R toward the direction toward RD up to a position CXa, because the angle α observing the virtual camera C and the player character PCH from the boss character BCH deviates in anticlockwise direction by an angle greater than - α o or because the player character PCH moves in the depth direction (Z axis direction), so that α is within - α and + α.

The optical axis LHc of the virtual camera C after the movement is set so as to pass through the middle point of the reference points P and B of the player character PCH and the boss character BCH, respectively. New horizontal visual field of LH1 (corresponding to LH1 before movement) and LH2 (corresponding to LH2 before movement) is shaped.

Therefore, both of the player character PCH and the boss character BCH are easily included within the horizontal visual field of the virtual camera C, as well as, the player character PCH is positioned before the boss character BCH.

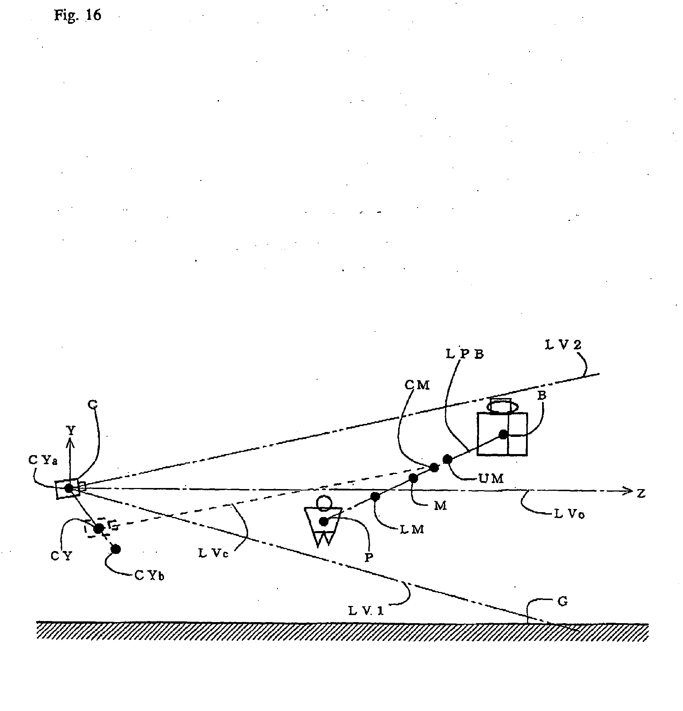

Fig. 16 is an elevation view showing the adjustment of the view point and the view direction of the virtual camera C according to the vertical visual field angle from - β 1 to +β2.

In Fig. 16, a situation is shown that the boss character BCH moves (jumps) beyond LVo. The virtual camera C moves in the direction toward CYa up to CY. The optical axis LHc of the virtual camera C after the movement is set so as to pass through a point CM nearer from the point UM than the middle point M on a straight line LPB connecting the reference points P and B of the player character PCH and the boss character BCH, respectively. The distance between the middle point M and the opint CM corresponds to the distance between the reference point B of the boss character BCH and LVo.

Therefore, the virtual camera C observes the player character PCH and the boss character BCH at a greater elevation angle from beneath the player character PCH. The player character PCH and the boss character BCH never disappear from the display image, as well as, a dynamic jumping feeling is obtained.

The control of the view point and the view direction are executed with a slight delay time following to the movement of the player character PCH and the boss character.

In the image processing etc. of a video game in which a plurality of frame images are generated in real time for a moving picture, the new view points CX and CYb of the camera are objective points after the movement of the virtual camera C, not the points of the next frame corresponding to CXo and CYa before movement.

When the objective points are set remote from CXo and CYa before movement, the view points are gradually dislocated through several steps of frames. During the dislocation between successive two frames, the next camera view point is calculated.

Since the view points CX and CYb are renewed in every frames, they are calculated for every frames between the objective renewed view points and the present view points. Therefore, intense changes and shaking are prevented and so called "three dimension sickness" is abated.

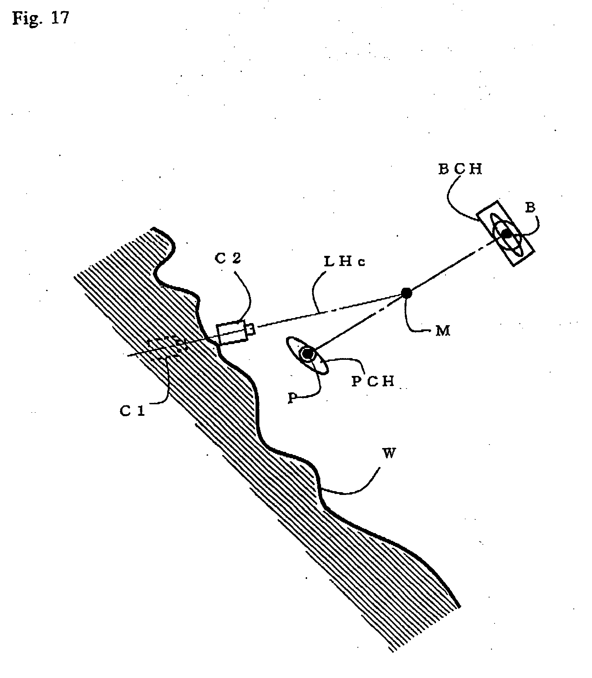

Fig. 17 shows a collision processing when the virtual camera is moved in the trivial character fight and the boss fight.

The virtual camera is positioned at a position suitable for the fight against the trivial characters (not shown) and the boss characters BCH, for example behind the player character PCH etc. However, such position C1 may be within a thickness of a wall W of a background according to the above calculation. In this case, the display image may be unnatural as it is, so the virtual camera C1 is moved along the view direction LHc to a position C2 outside the wall W.

If a collision occurs of the virtual camera with the player character, trivial character or boss character, the characters are changed gradually to be transparent. The characters are expressed as clear as possible with preventing unnatural expression.

It is unnecessary that the movement locus of the camera C strictly follows the algorithm of Figs. 13 to 16. For example, the virtual camera C is moved substantially along an arc centering a point between BP or an adjacent point so as to approach the player character PCH, on the horizontal plane. On the vertical plane, the virtual camera C is moved so as to approach the player character PCH.

The movement locus of the virtual camera C may be modified with reference to a calculation speed of coordinate and a display result.

In the game information processing apparatus 100, the image generating means 116 functions as a means for setting the middle point M and the horizontal view field angle - θ to + θ and as a means for judging whether the points P and B are included within the range of the horizontal view field or not. The means 116 functions as a means for moving the virtual camera C along the arc centering the middle point M so as to decrease a acute angle shaped by the straight lines PM and CM when the point P or B goes out of the range of the horizontal view field.

The image generating means 116 functions as a means for setting the range of the angle α o on both sides of the straight line connecting the points P and C and as a means for judging whether the point P is positioned in the range or not. The means 116 functions as a means for moving the virtual camera C along the arc centering the middle point M so as to decrease a acute angle shaped by the straight lines PC and CM when the point P goes out of the range.

The image generating means 116 functions as a means for moving the virtual camera C with keeping a distance from the player character PCH and as a means for moving the camera C into behind the player character PCH by "view point reset" when the button PB12 of the controller 2100 is push.

The image generating means 116 functions as a means for executing canceling of the boss lock mode by pushing the button PB11 of the controller 2100 when the boss character BCH appears in the three dimensional virtual space and as means for preventing the boss lock mode when the boss character BCH disappears.

The image generating means 116 functions as a means for judging whether the boss character BCH moves beyond over the horizontal plane LHo or not, and functions as a means for setting the point CYb. The image generating means 116 functions as a means for moving the virtual camera C toward CYb when the boss character go beyond the horizontal plane.

### [Game Program]

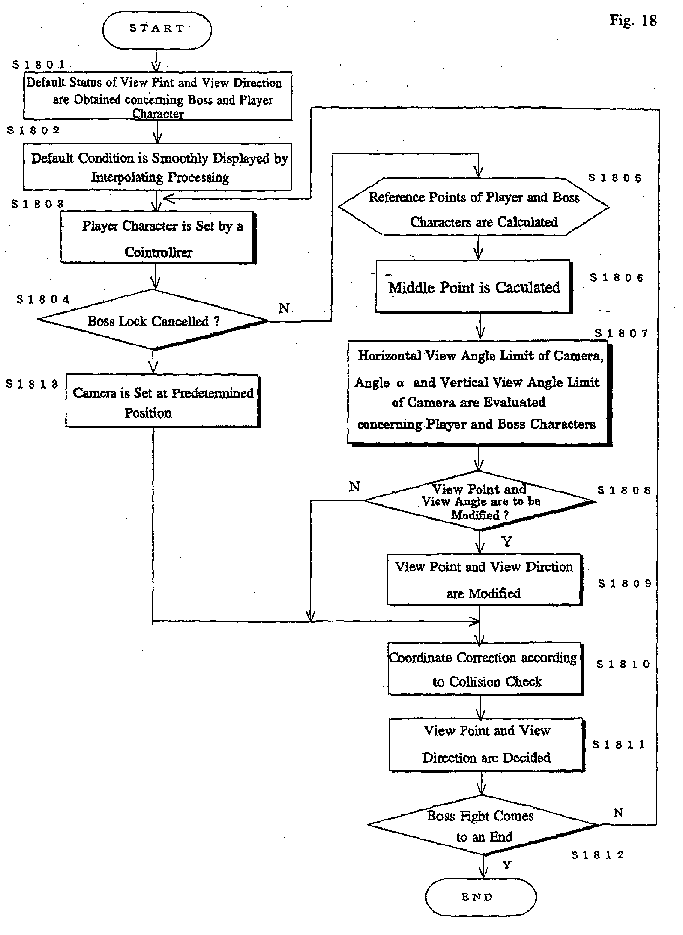

In Fig. 18, the following steps are executed by the image generating means 116 when the game information processing apparatus executes the processing of the boss fight included in the game program.

Step S1801: When the game comes to a stage of boss fight (the boss character appears when the player character reaches a predetermined area or a predetermined condition is fulfilled during the game, etc.), the image generating means 116 obtains positions of the player character PCH and the boss character BCH, the view point of the virtual camera and the default view direction. At the initial condition of the boss fight, the boss lock mode is applied. In the trivial character fight mode, the view point cannot changed to the boss lock mode.

Step S1802: The display image is smoothly changed by interpolating processing from that of the present view point through the situation that the player character PCH comes into the boss fight stage to the initial situation of the view point and view direction obtained in the step S1801, for a natural situation change. The steps S1801 and S1802 may be omitted.

Step S1803: Next to the step S1802, the position and movement of the player character PCH is set according to the operation input from the controller 2100.

Step S1804: Next to the step S1803, it is judged whether the player cancels the boss lock mode by the button PB12 or not. When the boss lock mode is not cancelled, the processing is advanced to the step S 1805, when cancelled, to the step S 1813.

Step S1805: The reference points P and B of the player character PCH and the boss character BCH, respectively, are calculated.

Step S1806: The middle point M is calculated according to the reference points P and B calculated in the step S 1805.

Step S 1807: The horizontal visual field angle (- θ to + θ ), the vertical visual field angle (- β to + β ) and the angle α (- α o to + α o) observing the visual camera C and the player character PCH from the boss character BCH are evaluated, for judging whether the player character and the boss character (enemy character) exist within the range or not. The above "visual field angle" is not only the visual field angle for generating the image actually displayed on the display but also includes a virtual visual field angle set for calculating the position of the view point.

Step S 1808: According to the evaluation of the step S 1807, it is judged whether the view point or the view direction is to be corrected or not. When the view point or the view direction is to be corrected, that is, when it is judged that the player character and the boss character are out of the range of the visual field angle, the processing is advanced to the step S 1809, when not to be corrected, jumped to the step S 1810.

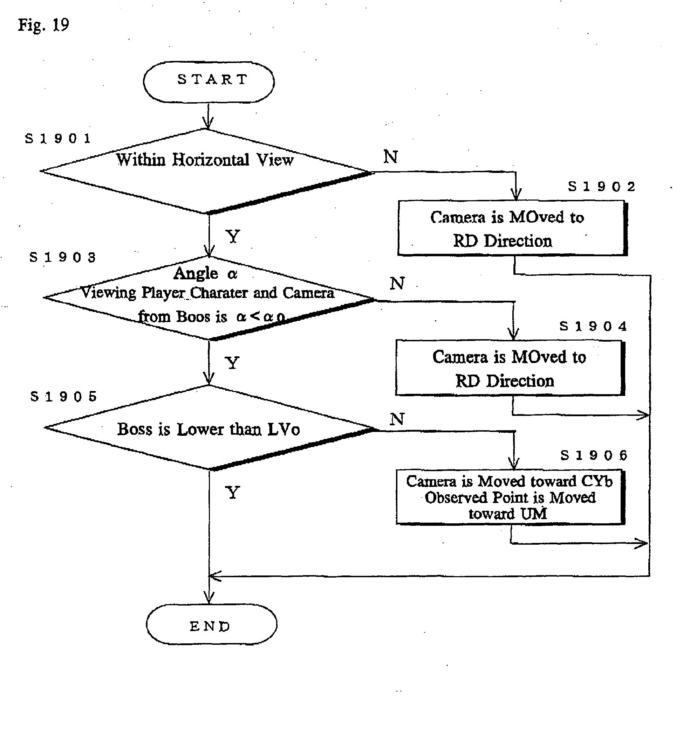

Step S 1809: According to the evaluation of the step S1807, the view point or the view direction is corrected. The processing is described in detail with reference to Fig. 19.

Step S1810: Unnatural expression such as the collision shown in Fig. 17 is checked.

Step S1811: According to the collision check etc. of the step S1810, the view point and/or view direction is corrected if necessary, and the two dimensional display image is generated of the view point and the view direction.

Step S1812: It is judged whether the boss fight comes to an end or not. When the boss fight comes is to be continued, the processing is returned to step S1803, when the boss fight is to be terminated, the processing is terminated.

Step S 1813: The view point is positioned remote by a predetermined distanced from the player character so as to follow the movement of the player character corresponding to the setting of the player character in step S 1803. Then, the processing is advanced to the step S1810.

In Fig. 19, the correcting processing of the view point and the view direction (step S 1808) in Fig. 18 includes the following steps.

Step S1901: The position of the boss character BCH and the player character PCH in the range of the horizontal visual field angle (- θ to + θ) is judged. When boss character BCH or the player character PCH is out of the range of the horizontal visual field angle, the processing is advanced to the step S1902, when within the range, to the step S1903.

Step S 1902: As shown in Fig. 14, the virtual camera C is moved in the RD direction so that the boss character BCH and the player character PCH are included within the range of the horizontal visual field angle. The RD direction is that the smaller angle (acute angle) of angles β and γ is decreased, which are shaped by a crossing of the straight line connecting the view point and the observed point and the straight line connecting the player character and the observed point. The view point is moved in this direction along the arc centering the observed point. The view point may be moved along the arc centering the observed point so as to decrease the smaller (acute) angle of angles δ and δ 2, which are shaped by the straight line connecting the view point and the observed point and a straight line connecting the straight line connecting the view point position CX and the observed point after movement.

Step S1903: It is judged whether the angle α observing the virtual camera C and the player character PCH from the boss character BCH is in the range from - α o to + α o or not. When the angle α is out of the range, the processing is advanced to the step S 1904, when within the range from - α o to + α o, to the step S 1905.

Step S1904: As shown in Fig. 15, the virtual camera C is moved to the RD direction so that the angle α is within the range from - α o to + α o.

Step S1905: It is judged whether the boss character BCH is higher than the horizontal line LVo or not. When the boss character BCH is higher than the horizontal line LV, the processing is advanced to the step S1906, otherwise, the processing is terminated.

As mentioned above, a fight mainly against the boss character BCH by the boss lock mode occasionally, and it is possible to operate freely the player character PCH during the boss lock mode. Therefore, the operation of the fight against the boss character is simplified with keeping the powerful impact and interest.

The order of the judgment of the steps S1901, S 1903 and S 1905 can be changed and the steps S1902, S1904 and S1906 are executed corresponding to the judgments, respectively.

In the above embodiment, the player character and boss character move mainly on the horizontal plane, and it is set that the player character and boss character are displayed even when the boss character jumps. However, if the movement direction of the virtual camera is set to be upward, the downward movement of the boss character can be displayed.

The present invention is not limited to the above embodiment, and is applicable to a any game programs in which various enemy characters appear and a caution about other enemy characters is needed during fighting mainly against one enemy character.

The view point control for the trivial character fight mode may be just a control of moving the view point with keeping a predetermined distance from the player character, in the case the trivial character fight mode and the boss character fight mode are alternatively changed when the boss character appears or the player character enters a predetermined area on the map. The view point may be fixed in the three dimensional space for observing a predetermined area of the map regardless of the movement of the player character.

### Advantages

According to the present invention, the operation of fighting against the boss character is simplified without different feeling from the fighting against the trivial characters, with securing the dynamics and interest as a game.

## Claims

1. An image processing program executable by a computer which arranges a player character (PCH), an enemy character (BCH) and a view point (C) in a three dimensional virtual space and generates an image of said player character and said enemy character viewed from said view point in a view direction, **characterized in that** said image processing program includes a first view point mode comprising:
A step for setting an observed point (M) on a straight line connecting a first and second coordinate points which represent said player character and said enemy character, respectively, and for setting a first fan-shaped area expanding from an apex of said view point along both sides of a straight line connecting said view point and said observed point by a first angle (θ);
A step for judging whether or not both of said player character and said enemy character exist in said first area; and
A step for moving said view point substantially along an arc centred at said observed point with a radius (R) of a straight line connecting said view point and said observed point, so that an acute angle, which is defined by a straight line connecting said first coordinate point and said observed point and a straight line connecting said view point and said observed point, becomes smaller, when it is judged that either of said player character or said enemy character does not exist in said first area.

2. An image processing program according to Claim 1, wherein said first view point mode further comprises:
A step for setting a second fan-shaped area expanding from an apex of said second coordinate point along both sides of a straight line connecting said second coordinate point and said view point or a point adjacent to said view point by a second angle;
A step for judging whether said player character exists in said second area or not; and
A step for moving said view point substantially along an arc centred at said observed point with a radius of a straight line connecting said view point and said observed point, so that an acute angle, which is defined by a straight line connecting said first coordinate point and said observed point and a straight line connecting said view point and said observed point, becomes smaller, when it is judged that said player character does not exist in said second area.

3. A game information processing program according to claim 2, wherein said image processing program further comprises:
A second view point mode comprising;
A step for moving said view point while maintaining a distance between said view point and said player character; and
A step for moving said view point behind said player character by an operational input of an operating means; and
A step for changing one of said first and second view point mode to the other when a predetermined enemy character is positioned in said three dimensional virtual space; and
A step for selecting said second view point mode fixedly when said predetermined enemy character is removed from said three dimensional virtual space.

4. An image processing program according to Claim 1 or Claim 3, wherein said first angle is a horizontal angle viewed from said view point, said image processing program further comprising;
A step for judging whether or not said enemy character moves vertically to a position over a predetermined height from a horizontal plane in said three dimensional virtual space;
A step for setting a target position departed from a current position of said view point, toward which said view point is moved, when it is judged that said enemy character moves to a position over said predetermined height; and
A step for moving said view point toward said target position from said current position of said view point.

5. A game information processing apparatus which arranges a player character (PCH), an enemy character (BCH) and a view point (C) in a three dimensional virtual space and generates an image of said player character and said enemy character viewed from said view point in a view direction, **characterized in that** said game information processing apparatus includes a first view point mode means, comprising:
A first means for setting an observed point (M) on a straight line connecting a first and second coordinate points which represent said player character and said enemy character, respectively, and for setting a first fan-shaped area expanding from an apex of said view point along both side of a straight line connecting said view point and said observed point by a first angle θ;
A second means for judging whether or not both of said player character and said enemy character exist in said first area; and
A third means for moving said view point substantially along an arc centred at said observed point with a radius (R) of a straight line connecting said view point and said observed point, so that an acute angle, which is defined by a straight line connecting said first coordinate point and said observed point and a straight line connecting said view point and said observed point, becomes smaller, when it is judged that either of said player character or said enemy character does not exist in said first area.

6. A game information processing apparatus according to Claim 5, further comprising:
A fourth means for setting a second fan-shaped area expanding from an apex of said second coordinate point along both side of a straight line connecting said second coordinate point and to said view point or a point adjacent to said view point by a second angle;
A fifth means for judging whether said player character exists in said second area or not; and
A sixth means for moving said view point substantially along an arc centred at said observed point with a radius of a straight line connecting said view point and said observed point, so that an acute angle, which is defined by a straight line connecting said first coordinate point and said observed point and a straight line connecting said view point and said observed point, becomes smaller, when it is judged that said player character does not exist in said second area.

7. A game information processing apparatus according to Claim 6, further including:
A second view point mode means comprising;
A seventh means for moving said view point while maintaining a predetermined distance from said player character; and
An eighth means for moving said view point behind said player character by an operation of a first operation means;
A means for changing between operation of one of said first and second view point mode means to the other when a predetermined enemy character is positioned in said three dimensional virtual space; and
A means for selecting operation of said second view point mode means fixedly when said predetermined enemy character is removed from said three dimensional virtual space.

8. A game information processing apparatus according to Claim 5 or Claim 7, wherein said first angle is a horizontal angle viewed from said view point, said game information processing apparatus further comprising;
A ninth means for judging whether said enemy character moves vertically to a position over a predetermined height from a horizontal plane or not in said three dimensional virtual space;
A tenth means for setting a target position departed from a current position of said view point, toward which said view point is moved, when it is judged that said enemy character moves to a position over said predetermined height; and
An eleventh means for moving said view point toward said target position from said current position of said view point.

9. A memory medium readable by a game information processing apparatus in which said image processing program according to any of Claims 1 to 4 is stored.

## Patentansprüche

1. Bildverarbeitungsprogramm, das von einem Computer ausgeführt werden kann, der eine Spielerfigur (PCH), eine Feindfigur (BCH) und einen Blickpunkt (C) in einem virtuellen dreidimensionalen Raum anordnet und ein Bild der Spielerfigur und der Feindfigur gesehen von dem Blickpunkt in eine Blickrichtung erzeugt, **dadurch gekennzeichnet, dass** das Bildverarbeitungsprogramm einen ersten Blickpunktmodus aufweist, der Folgendes aufweist:
einen Schritt zum Einstellen eines beobachteten Punkts (M) auf einer geraden Linie, die einen ersten und einen zweiten Koordinatenpunkt verbindet, die die Spielerfigur bzw. die Feindfigur darstellen, und zum Einstellen eines ersten fächerförmigen Bereichs, der sich von einem Gipfelpunkt des Blickpunkts entlang beider Seiten einer geraden Linie erstreckt, die den Blickpunkt und den beobachteten Punkt unter einem ersten Winkel (θ) verbindet;
einen Schritt zum Beurteilen, ob die Spielerfigur und die Feindfigur in dem ersten Bereich existieren oder nicht, und
einen Schritt zum Bewegen des Blickpunkts im Wesentlichen entlang eines Bogens, der in dem Beobachtungspunkt zentriert ist, mit einem Radius (R) einer geraden Linie, die den Blickpunkt und den beobachteten Punkt verbindet, so dass ein spitzer Winkel, der durch eine gerade Linie, die den ersten Koordinatenpunkt und den beobachteten Punkt verbindet, und eine gerade Linie, die den Blickpunkt und den beobachteten Punkt verbindet, definiert ist, kleiner wird, wenn geurteilt wird, dass entweder die Spielerfigur oder die Feindfigur in dem ersten Bereich nicht existiert.

2. Bildverarbeitungsprogramm nach Anspruch 1, wobei der erste Blickpunkt ferner Folgendes aufweist:
einen Schritt zum Einstellen eines zweiten fächerförmigen Bereichs, der sich von einem Gipfelpunkt des zweiten Koordinatenpunkts entlang beider Seiten einer gerade Linie erstreckt, die den zweiten Koordinatenpunkt und den Blickpunkt oder einen benachbarten Punkt mit dem Blickpunkt durch einen zweiten Winkel verbindet;
einen Schritt zum Beurteilen, ob die Spielerfigur in dem zweiten Bereich existiert oder nicht und
einen Schritt zum Bewegen des Blickpunkts im Wesentlichen entlang eines Bogens, der in dem beobachteten Punkt zentriert ist, mit dem Radius einer geraden Linie, die den Blickpunkt und den beobachteten Punkt verbindet, so dass ein spitzer Winkel, der von einer geraden Linie definiert wird, die den ersten Koordinatenpunkt und den beobachteten Punkt verbindet, und einer geraden Linie, die den Blickpunkt und den beobachteten Punkt definiert, kleiner wird, wenn geurteilt wird, dass die Spielerfigur in dem zweiten Bereich nicht existiert.

3. Spielinformationsverarbeitungsprogramm nach Anspruch 2, wobei das Bildverarbeitungsprogramm ferner Folgendes aufweist:
einen zweiten Blickpunktmodus, der Folgendes aufweist:
einen Schritt zum Bewegen des Blickpunkts, während eine Entfernung zwischen dem Blickpunkt und der Spielerfigur eingehalten wird, und
einen Schritt zum Bewegen des Blickpunkts hinter die Spielerfigur durch eine operative Eingabe eines Bedienmittels, und
einen Schritt zum Wechseln entweder des ersten oder des zweiten Blickpunktsmodus auf den anderen, wenn eine vorbestimmte Feindfigur in dem virtuellen dreidimensionalen Raum positioniert ist, und
einen Schritt zum Auswählen des zweiten Blickpunktmodus stationär, wenn die vorbestimmte Feindfigur aus dem virtuellen dreidimensionalen Raum entfernt wird.

4. Bildverarbeitungsprogramm nach Anspruch 1 oder 3, wobei der erste Winkel ein horizontaler Winkel gesehen von dem Blickpunkt ist, wobei das Bildverarbeitungsprogramm ferner Folgendes aufweist:
einen Schritt zum Beurteilen, ob sich die Feindfigur senkrecht zu einer Position über eine vorbestimmte Höhe von einer horizontalen Ebene in dem virtuellen dreidimensionalen Raum bewegt,
einen Schritt zum Einstellen einer Zielposition ausgehend von einer aktuellen Position des Blickpunkts, zu welchem der Blickpunkt bewegt wird, wenn geurteilt wird, dass sich die Feindfigur zu einer Position über der vorbestimmten Höhe bewegt, und
einen Schritt zum Bewegen des Blickpunkts zu der Zielposition von der aktuellen Position des Blickpunkts ausgehend.

5. Spielinformationsverarbeitungsgerät, das eine Spielerfigur (PCH), eine Feindfigur (BCH) und einen Blickpunkt (C) in einem virtuellen dreidimensionalen Raum anordnet und ein Bild der Spielerfigur und der Feindfigur gesehen von dem Blickpunkt in eine Blickrichtung erzeugt, **dadurch gekennzeichnet, dass** das Spielinformationsverarbeitungsgerät Mittel für einen ersten Blickpunktmodus aufweist, die Folgendes aufweisen:
ein erstes Mittel zum Einstellen eines beobachteten Punkts (M) auf einer geraden Linie, die einen ersten und einen zweiten Koordinatenpunkt verbindet, die die Spielerfigur bzw. die Feindfigur darstellen, und zum Einstellen eines ersten fächerförmigen Bereichs, der sich von einem Gipfelpunkt des Blickpunkts entlang beider Seiten einer geraden Linie erstreckt, die den Blickpunkt und den beobachteten Punkt unter einem ersten Winkel (θ) verbindet,
ein zweites Mittel zum Beurteilen, ob sowohl die Spielerfigur als auch die Feindfigur in dem ersten Bereich existieren oder nicht, und
ein drittes Mittel zum Bewegen des Blickpunkts im Wesentlichen entlang eines Bogens, der in den beobachteten Punkt zentriert ist, mit einem Radius (R) einer geraden Linie, die den Blickpunkt und den beobachteten Punkt verbindet, so dass ein spitzer Winkel, der von einer geraden Linie, die den ersten Koordinatenpunkt und den beobachteten Punkt verbindet, und einer geraden Linie, die den Blickpunkt und den beobachteten Punkt verbindet, definiert wird, kleiner wird, wenn geurteilt wird, dass entweder die Spielerfigur oder die Feindfigur in dem ersten Bereich nicht existiert.

6. Spielinformationsverarbeitungsgerät nach Anspruch 5, das ferner Folgendes aufweist:
ein viertes Mittel zum Einstellen eines zweiten fächerförmigen Bereichs, der sich von einem Gipfelpunkt des zweiten Koordinatenpunkts entlang beider Seiten einer geraden Linie erstreckt, die den zweiten Koordinatenpunkt und den Blickpunkt oder einen Punkt benachbart zu dem Blickpunkt mit einem zweiten Winkel verbindet,
ein fünftes Mittel zum Beurteilen, ob die Spielerfigur in dem zweiten Bereich existiert oder nicht, und
ein sechstes Mittel zum Bewegen des Blickpunkts im Wesentlichen entlang eines Bogens, der in dem beobachteten Punkt zentriert ist, mit einem Radius einer geraden Linie, die den Blickpunkt und den beobachteten Punkt verbindet, so dass ein spitzer Winkel, der von einer geraden Linie, die den ersten Koordinatenpunkt und den beobachteten Punkt verbindet, und einer geraden Linie, die den Blickpunkt und den beobachteten Punkt verbindet, definiert ist, kleiner wird, wenn geurteilt wird, dass sich die Spielerfigur nicht in dem zweiten Bereich befindet.

7. Spielinformationsverarbeitungsgerät nach Anspruch 6, das ferner Folgendes aufweist:
Mittel für einen zweiten Blickpunktmodus, die Folgendes umfassen:
ein siebtes Mittel zum Bewegen des Blickpunkts, während eine vorbestimmte Entfernung von der Spielerfigur eingehalten wird, und
ein achtes Mittel zum Bewegen des Blickpunkts hinter die Spielerfigur durch Betätigen eines ersten Betätigungsmittels,
ein Mittel zum Wechseln zwischen dem Betrieb des einen oder anderen Blickpunktmodusmittels auf das andere, wenn eine vorbestimmte Feindfigur in dem virtuellen dreidimensionalen Raum positioniert wird, und
ein Mittel zum Auswählen des Betriebs des zweiten Blickpunktmodusmittels stationär, wenn die vorbestimmte Feindfigur aus dem virtuellen dreidimensionalen Raum entfernt wird.

8. Spielinformationsverarbeitungsgerät nach Anspruch 5 oder Anspruch 7, wobei der erste Winkel von dem Blickpunkt aus gesehen ein horizontaler Winkel ist, wobei das Spielinformationsverarbeitungsgerät ferner Folgendes aufweist:
ein neuntes Mittel zum Beurteilen, ob sich die Feindfigur senkrecht zu einer Position über einer vorbestimmten Höhe von einer horizontalen Ebene in dem virtuellen dreidimensionalen Raum bewegt oder nicht,
ein zehntes Mittel zum Einstellen einer Zielposition ausgehend von einer aktuellen Position des Blickpunkts, zu welcher der Blickpunkt bewegt wird, wenn geurteilt wird, dass sich die Feindfigur zu einer Position über der vorbestimmten Höhe bewegt, und
ein elftes Mittel zum Bewegen des Blickpunkts zu der Zielposition ausgehend von der aktuellen Position des Blickpunkts.

9. Speichermedium, das von einem Spielinformationsverarbeitungsgerät gelesen werden kann, in dem das Bildverarbeitungsprogramm gemäß einem der Ansprüche 1 bis 4 gespeichert ist.

## Revendications

1. Programme de traitement d'image exécutable par un ordinateur qui agence un personnage joueur (PCH), un personnage adversaire (BCH) et un point de vue (C) dans un espace virtuel tridimensionnel et génère une image dudit personnage joueur et dudit personnage adversaire vue depuis ledit point de vue dans une direction de visualisation, **caractérisé en ce que** ledit programme de traitement d'image comprend un premier mode de point de vue comprenant :
une étape pour définir un point observé (M) sur une ligne droite reliant un premier et un second point de coordonnées qui représentent ledit personnage joueur et ledit personnage adversaire, respectivement, et pour définir une première zone en éventail s'étendant d'un sommet dudit point de vue le long des deux côtés d'une ligne droite reliant ledit point de vue et ledit point observé par un premier angle (θ);
une étape pour estimer si lesdits deux personnages joueur et adversaire se trouvent ou non dans ladite première zone ; et
une étape pour déplacer ledit point de vue sensiblement le long d'un arc centré au niveau dudit point observé avec un rayon (R) d'une ligne droite reliant ledit point de vue et ledit point observé, de telle sorte qu'un angle aigu, qui est défini par une ligne droite reliant ledit premier point de coordonnées et ledit point observé et une ligne droite reliant ledit point de vue et ledit point observé, devienne plus petit, lorsqu'il est estimé que l'un ou l'autre dudit personnage joueur ou dudit personnage adversaire ne se trouve dans ladite première zone.

2. Programme de traitement d'image selon la revendication 1, dans lequel ledit premier mode de point de vue comprend en outre :
une étape pour définir une seconde zone en éventail s'étendant d'un sommet dudit second point de coordonnées le long des deux côtés d'une ligne droite reliant ledit second point de coordonnées et ledit point de vue ou un point adjacent audit point de vue par un second angle ;
une étape pour estimer si ledit personnage joueur se trouve dans ladite seconde zone ou non ; et
une étape pour déplacer ledit point de vue sensiblement le long d'un arc centré au niveau dudit point observé avec un rayon d'une ligne droite reliant ledit point de vue et ledit point observé, de sorte qu'un angle aigu, qui est défini par une ligne droite reliant ledit premier point de coordonnées et ledit point observé et une ligne droite reliant ledit point de vue et ledit point observé, devienne plus petit, lorsqu'il est estimé que ledit personnage joueur ne se trouve pas dans ladite seconde zone.

3. Programme de traitement d'informations de jeu, selon la revendication 2, dans lequel ledit programme de traitement d'image comprend en outre :
un second mode de point de vue comprenant :
une étape pour déplacer ledit point de vue tout en conservant une distance entre ledit point de vue et ledit personnage joueur ; et
une étape pour déplacer ledit point de vue derrière ledit personnage joueur par une entrée opérationnelle de moyens d'exploitation ; et
une étape pour passer de l'un à l'autre desdits premier et second modes de point de vue lorsqu'un personnage adversaire prédéterminé est positionné dans ledit espace virtuel tridimensionnel ; et
une étape pour choisir ledit second mode de point de vue de façon fixe lorsque ledit personnage adversaire prédéterminé est retiré dudit espace virtuel tridimensionnel.

4. Programme de traitement d'image selon la revendication 1 ou la revendication 3, dans lequel ledit premier angle est un angle horizontal visualisé à partir dudit point de vue, ledit programme de traitement d'image comprenant en outre :
une étape destinée à estimer si ledit personnage adversaire se déplace ou non verticalement vers une position sur une hauteur prédéterminée depuis un plan horizontal dans ledit espace virtuel tridimensionnel ;
une étape destinée à définir une position cible à partir d'une position courante dudit point de vue, vers laquelle ledit point de vue est déplacé, lorsqu'il est estimé que ledit personnage adversaire se déplace vers une position sur ladite hauteur prédéterminée ; et
une étape pour déplacer ledit point de vue vers ladite position cible à partir de ladite position courante dudit point de vue.

5. Appareil de traitement d'informations de jeu qui agence un personnage joueur (PCH), un personnage adversaire (BCH) et un point de vue (C) dans un espace virtuel tridimensionnel et génère une image dudit personnage joueur et dudit personnage adversaire visualisée depuis ledit point de vue dans une direction de visualisation, **caractérisé en ce que** ledit appareil de traitement d'informations de jeu comprend des moyens de premier mode de point de vue comprenant :
des premiers moyens pour définir un point observé (M) sur une ligne droite reliant un premier et un second point de coordonnées qui représentent ledit personnage joueur et ledit personnage adversaire, respectivement, et pour définir une première zone en éventail s'étendant d'un sommet dudit point de vue le long des deux côtés d'une ligne droite reliant ledit point de vue et ledit point observé par un premier angle (θ);
des deuxièmes moyens pour estimer si lesdits deux personnages joueur et adversaire se trouvent ou non dans ladite première zone ; et
des troisièmes moyens pour déplacer ledit point de vue sensiblement le long d'un arc centré au niveau dudit point observé avec un rayon (R) d'une ligne droite reliant ledit point de vue et ledit point observé, de telle sorte qu'un angle aigu, qui est défini par une ligne droite reliant ledit premier point de coordonnées et ledit point observé et une ligne droite reliant ledit point de vue et ledit point observé, devienne plus petit, lorsqu'il est estimé que l'un ou l'autre dudit personnage joueur et dudit personnage adversaire ne se trouve dans ladite première zone.

6. Appareil de traitement d'informations de jeu selon la revendication 5, comprenant en outre :
des quatrièmes moyens pour définir une seconde zone en éventail s'étendant d'un sommet dudit second point de coordonnées le long des deux côtés d'une ligne droite reliant ledit second point de coordonnées et ledit point de vue ou un point adjacent audit point de vue par un second angle ;
des cinquièmes moyens pour estimer si ledit personnage joueur se trouve ou non dans ladite seconde zone ; et
des sixièmes moyens pour déplacer ledit point de vue sensiblement le long d'un arc centré au niveau dudit point observé avec un rayon d'une ligne droite reliant ledit point de vue et ledit point observé, de sorte qu'un angle aigu, qui est défini par une ligne droite reliant ledit premier point de coordonnées et ledit point observé et une ligne droite reliant ledit point de vue et ledit point observé, devienne plus petit, lorsqu'il est estimé que ledit personnage joueur ne se trouve pas dans ladite seconde zone.

7. Appareil de traitement d'informations de jeu selon la revendication 6, comprenant en outre :
des moyens de second mode de point de vue comprenant :
des septièmes moyens pour déplacer ledit point de vue tout en conservant une distance prédéterminée par rapport audit personnage joueur ; et
des huitièmes moyens pour déplacer ledit point de vue derrière ledit personnage joueur par une opération de premiers moyens d'exploitation ; et
des moyens pour passer de l'un à l'autre des moyens de premier et second modes de point de vue lorsqu'un personnage adversaire prédéterminé est positionné dans ledit espace virtuel tridimensionnel ; et
des moyens pour choisir d'utiliser lesdits moyens de second mode de point de vue de façon fixe lorsque ledit personnage adversaire prédéterminé est retiré dudit espace virtuel tridimensionnel.

8. Appareil de traitement d'informations de jeu selon la revendication 5 ou la revendication 7, dans lequel ledit premier angle est un angle horizontal visualisé à partir dudit point de vue, ledit appareil de traitement d'informations de jeu comprenant en outre :
des neuvièmes moyens pour estimer si ledit personnage adversaire se déplace ou non verticalement vers une position sur une hauteur prédéterminée depuis un plan horizontal dans ledit espace virtuel tridimensionnel ;
des dixièmes moyens pour définir une position cible à partir d'une position courante dudit point de vue, vers laquelle ledit point de vue est déplacé, lorsqu'il est estimé que ledit personnage adversaire se déplace vers une position sur ladite hauteur prédéterminée ; et
des onzièmes moyens pour déplacer ledit point de vue vers ladite position cible à partir de ladite position courante dudit point de vue.

9. Support de mémoire lisible par un appareil de traitement d'informations de jeu dans lequel est stocké ledit programme de traitement d'image selon l'une quelconque des revendications 1 à 4.
